# EUROPÄISCHE PATENTANMELDUNG

(11) **EP 0 896 185 A1**
(43) Veröffentlichungstag der Anmeldung: **10.02.1999**
(21) Anmeldenummer: 98112101.5
(22) Anmeldetag: 01.07.1998
(51) Int. Cl.: F16M 13/00

(54) **Geschlossener Trag- und Halterahmen**

(30) Priorität: 08.08.1997 DE 19734350
(71) Anmelder: Schirmer, Eckhard, 86911 Diessen (DE)
(72) Erfinder: Schirmer, Eckhard, 86911 Diessen (DE)
(74) Vertreter: Lohrentz, Franz, Dipl.-Ing.

(57) **Zusammenfassung**

Ein geschlossener Trag- und Halterahmen zur Aufnahme und Halterung eines Gegenstands (5) z. B. eines Radio- oder Fernsehgeräts. Der Rahmen besteht aus einer Mehrzahl von weitgehend in einer gemeinsamen Ebene angeordneten Rahmenstreben (1), von denen jeweils benachbarte Rahmenstreben über ein Steckverbindungselement (2) derart verbunden sind, daß benachbarte Rahmenstreben unter einem sich zur Innenseite des Rahmens öffnenden Winkel angeordnet sind. Außerdem ist jedes Steckverbindungselement (2) über je ein spannbares Verbindungsglied (4) mit dem im Abstand von allen Rahmenstreben (1) angeordneten Gegenstand (5) oder mit einer den Gegenstand erfassenden gestaltfesten Halterung (3) verbunden.

## Beschreibung

Die Erfindung betrifft einen geschlossenen Trag- und Halterahmen, insbesondere zur Aufnahme und Halterung eines Gegenstands, z. B. eines Radio- oder Fernsehgeräts.

Radio- und Fernsehgeräte, Stereoanlagen, kleine Regale und Schränkchen zur Aufnahme von schmückenden Gegenständen, Bilder und ähnliche Gegenstände beeinflussen aufgrund ihrer Gestaltung und Anordnung in Wohnräumen wesentlich die Wohnlichkeit. Zugleich ist es häufig erwünscht, den Ort der Aufstellung oder Anordnung solcher Gegenstände auf einfache Weise verändern zu können, beispielsweise von Fernsehgeräten oder Stereoanlagen, z. B. den Boxen davon. Das setzt aber mitunter die Herausnahme solcher Geräte aus zugehörigen Möbelstücken voraus, was umständlich oder schwierig sein kann.

Weiterhin ist es häufig erforderlich, Gegenstände wie Bretter oder Platten, aber auch Möbel oder Möbelteile vorübergehend oder dauernd abzustützen, wozu entsprechende Unterlagen oder Stützkörper wie Böcke oder dergleichen benützt werden.

Der Erfindung liegt daher die Aufgabe zugrunde, einen Trag- und Halterahmen zur Aufnahme und Halterung von Gegenständen zu schaffen, der eine ansprechende Anordnung der Gegenstände mit einer zweckmäßigen Handhabung sowohl bezüglich der Ortsveränderung als auch des Einbaues der Gegenstände darin verbindet. Überdies soll dieser Tragrahmen einfach konstruiert und in der Lage sein, eine Stützfunktion zu erfüllen.

Erfindungsgemäß wird zur Lösung dieser Aufgabe ein Trag- und Halterahmen gemäß Anspruch 1 vorgeschlagen.

Die Erfindung geht von der Überlegung aus, daß der Trag- und Halterahmen - ähnlich wie ein Möbelstück zur Aufnahme der betrachteten Gegenstände - sowohl durch seine eigene Gestaltung als auch durch die im Raum schwebend erscheinende Anordnung dieser Gegenstände einen Teil der Wohnraumgestaltung ausmachen soll. Zugleich soll der Rahmen aber auch eine leichte Handhabbarkeit zusammen mit dem darin aufgenommenen Gegenstand ermöglichen. Infolge der gewählten Konstruktion ist ein ebener Rahmen sowohl zur Aufnahme von ausgeprägt räumlichen Gegenständen, wie Radio- oder Fernsehgeräten, aber auch von stärker flächen- oder plattenartig ausgebildeten Gegenstände geeignet, weil die einzelnen Rahmenstreben trotz der gewählten Steckverbindung an deren Enden durch die spannbaren Verbindungsglieder zu einem sehr stabilen und tragfähigen Rahmen verspannt werden können. Sofern die aufzunehmenden Gegenstände, bei denen es sich auch um Trenn- oder Stellwände bildende Platten oder dergleichen handeln kann, eine hinreichende Gestaltfestigkeit aufweisen, um eine direkte Verbindung der spannbaren Verbindungsglieder mit den Steckverbindungselementen zu erlauben, können die die Stabilität des Rahmens gewährleistenden, über die Verbindungsglieder übertragenen Zugkräfte unmittelbar in einen solchen Gegenstand eingeleitet werden. In allen anderen Fällen ist jedoch der aufzunehmende Gegenstand in einer entsprechend gestaltfesten Halterung erfaßt, die ihrerseits den die Stabilität des Rahmens gewährleistenden Zugkräften standhält und den Gegenstand festhält.

Aufgrund seiner Gestaltung hat der erfindungsgemäße Trag- und Halterahmen eine so große Stabilität, die durch die Größe der Zugspannung in den Verbindungsgliedern beeinflußbar ist, daß er nicht nur in dem vorstehend geschilderten Sinn zur Aufnahme und Halterung von Gegenständen, sondern auch zur Abstützung von Lasten wie Platten, Brettern und auch Möbeln und Möbelteilen herangezogen werden kann. So ist es beispielsweise möglich, durch vier in ihren Abmessungen naturgemäß unterschiedlich gehaltenen, im Viereck aufgestellten erfindungsgemäßen Tragrahmen ein Bettgestell auszubilden, wobei Stützelemente an den Rahmenstreben selbst vorgesehen sind, die als Auflage für einen Matratzenrost dienen. Auch können erfindungsgemäße Tragrahmen aufgrund ihrer Stabilität nach Art von Holzböcken zur Unterstützung von Plattformen oder Brettlagen verwendet werden.

Da der Rahmen aus einzelnen Rahmenstreben zusammengefügt ist, die jeweils miteinander über Steckverbindungselemente aneinander angeschlossen sind, erlaubt der Rahmen sowohl eine Polygonal- insbesondere Rechteckform als auch - bei Verwendung gekrümmter Rahmenstreben - eine runde oder Kreisform. Wesentlich ist stets, daß einander benachbarte Rahmenstreben durch das zugehörige Steckverbindungselement so miteinander verbunden sind, daß sie einen zur Rahmenmitte hin geöffneten Winkel einschließen. Hierdurch ist dafür gesorgt, daß die über das entsprechende Verbindungsglied angreifende, zur Rahmenmitte gerichtete Zugkraft Kraftkomponenten an den beiden Enden des Steckverbindungselements erzeugt, die dieses an die zugeordneten Enden der Rahmenstreben anzunähern suchen. Aufgrund der Geschlossenheit des Rahmens bewirken die zur Rahmenmitte gerichteten Zugkräfte daher je nach ihrer Größe einen festen Zusammenhalt und damit die genannte Stabilität.

Der Innenrahmen, an dem sich die unter Zugspannung stehenden Verbindungsglieder abstützen, erfährt in sich selbst Zugspannungen. Aus diesem Grund eignet sich in einer bevorzugten Ausführungsform als ein solcher Innenrahmen ein geschlossenes Seil, das über Umlenkglieder an den inneren Enden der Verbindungsglieder geführt ist. Da die Anzahl der Steckverbindungselemente und der diesen zugeordneten Verbindungsglieder von der gewählten Gestalt des Rahmens abhängt, entspricht die Kontur des durch das geschlossene Seil gebildeten Innenrahmens derjenigen des Rahmens selbst. Dieser Innenrahmen ergibt die Möglichkeit, die an den Verbindungsgliedern notwendigen Zugkräfte allein dadurch zu erzeugen, daß das den Innenrahmen bildende geschlossene Seil selbst, z. B. durch eine Spannvorrichtung, spannbar ist. Aufgrund der Umlenkglieder, über welche das Seil geführt ist, ergibt die in dem Innenrahmen herrschende Zugkraft die erforderlichen Zugkräfte an den Verbindungsgliedern, die wiederum die Stabilität des äußeren Rahmens bewirken. Anstelle einer Spannvorrichtung an dem durch ein geschlossenes Seil gebildeten Innenrahmen oder zusätzlich zu dieser können jedoch Spannvorrichtungen an allen Verbindungsgliedern selbst vorgesehen sein.

Wenn der in dem Rahmen aufzunehmende Gegenstand relativ flach ist, z. B. ein Bilderrahmen, eine Schmuckglasscheibe oder ein flacher Wasserbehälter aus Glas, dann sind an den inneren Enden der Verbindungsglieder Halteelemente angeordnet, die die zugeordnete Kante des Gegenstands formschlüssig umgreifen. Mit zunehmender Räumlichkeit des aufzunehmenden Gegenstands, z. B. bei einem Radio- oder Fernsehgerät, ist es zweckmäßig, solche Halterungselemente jeweils an einem senkrecht zur Rahmenebene gerichteten Tragstift vorzusehen, der nach beiden Seiten über die Rahmenebene hinausragt so, daß der Schwerpunkt des aufzunehmenden Gegenstands in der Rahmenebene liegt.

Grundsätzlich kann der erfindungsgemäße Trag- und Halterahmen entweder mittels Füssen aufgestellt oder mittels Aufhängeösen aufgehängt werden. In ersterem Fall ist eine leichte Ortsveränderung des Rahmens zusammen mit dem darin gehaltenen Gegenstand möglich.

Die Rahmenstreben sind vorzugsweise aus Hohlprofilstäben aus Kunststoff oder Metall gebildet, da hierdurch das Rahmengewicht klein gehalten werden kann. Die Steckverbindungselemente, welche die Ecken des Rahmens bilden, sind zur Übertragung der erforderlichen Kräfte ihrerseits vorzugsweise massiv. Die mit diesen Steckverbindungselementen verbundenen spannbaren Verbindungsglieder können entweder Zugseile oder Zugstäbe sein, die mit einer Spannvorrichtung ausgestattet sind. Die Spannvorrichtung, zweckmäßigerweise ein Schraub-Spannelement, erlaubt sowohl eine Längenveränderung der Verbindungsglieder als auch die Erzeugung der erforderlichen Zugkraft. Hierzu sind diese Spannvorrichtungen an mindestens einem Ende der Verbindungsglieder vorgesehen, wiederum zweckmäßigerweise an demjenigen Ende, das an das Steckverbindungselement angeschlossen ist. In diesem Fall kann nämlich die Spannvorrichtung in dem Inneren des Steckverbindungselements selbst verborgen untergebracht werden.

Neben den bereits genannten Anwendungsmöglichkeiten, für die der erfindungsgemäße Rahmen eingesetzt werden kann, ist es auch möglich, diesen in Verbindung mit darin gehaltenen Bild- oder Farbfolien oder -Textilien als Schmuckgegenstand an sich vorzusehen. Auch im Außenbereich kann der Rahmen durch die Halterung von Platten als Trennwand, als stellbare Balkon- oder Terrassenbegrenzung, als Zwischenzaun oder dergleichen eingesetzt werden.

Weitere Vorteile und Merkmale der Erfindung ergeben sich aus der nachfolgenden Beschreibung von

Ausführungsbeispielen anhand der beiliegenden Zeichnungen sowie aus weiteren Unteransprüchen. In den Zeichnungen zeigen:
Fig. 1 eine perspektivische Ansicht einer Ausführungsform des erfindungsgemäßen Rahmens, in welchem ein ausgeprägt räumlicher Körper aufgenommen ist;
Fig. 2 eine weitere Ausführungsform des erfindungsgemäßen Rahmens, in welchem ein flächiger Gegenstand gehalten ist;
Fig. 3 eine maßstäblich vergrößerte Einzeldarstellung eines Steckverbindungselements, teilweise geschnitten, und dessen Anschluß an die benachbarten Rahmenstreben,
Fig. 4 eine perspektivische, im Maßstab vergrößerte Teildarstellung der Einzelheit A in Fig. 1;
Fig. 5 eine zu Fig. 4 analoge perspektivische Teildarstellung einer Einzelheit mit einem abgewandelten Halteelement;
Fig. 6 eine Schnittdarstellung des Halteelements gemäß Fig. 5, geschnitten längs der Linie VI-VI in Fig. 7, und
Fig. 7 eine Seitenansicht des Halteelements gemäß den Fig. 5 und 6.

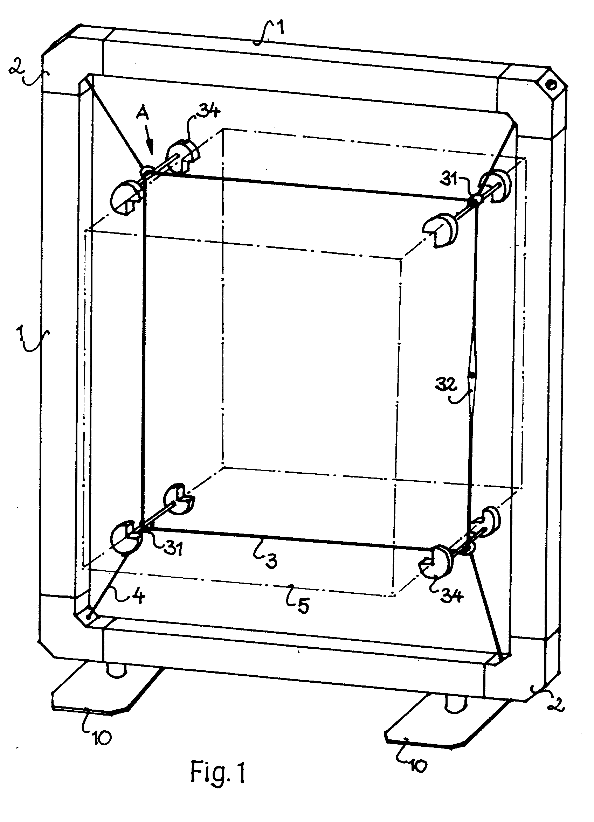

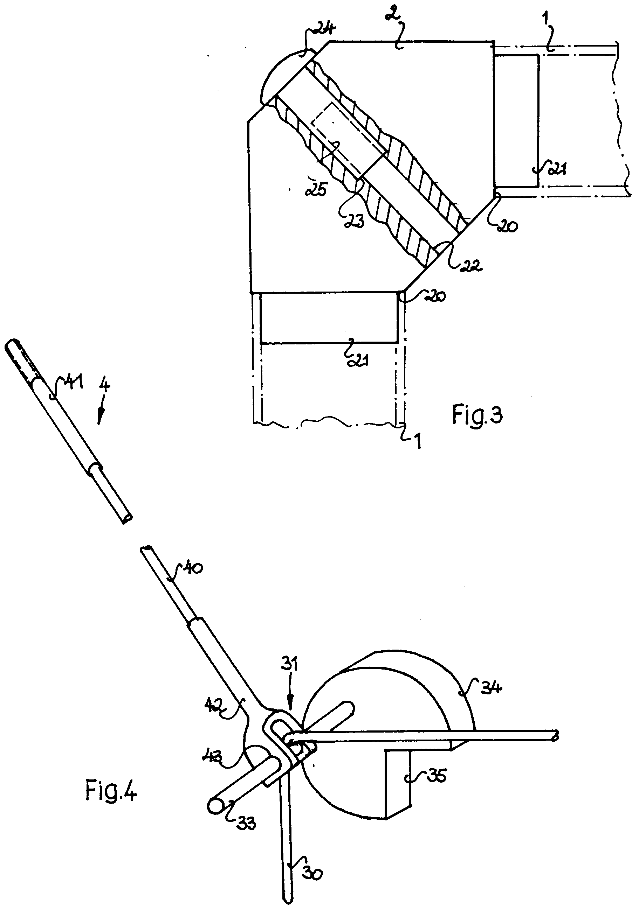

Der in Fig. 1 gezeigte geschlossene Trag- und Halterahmen hat eine Rechteckform, die aus vier jeweils paarweise gleich langen Rahmenstreben 1 gebildet ist. Die Rahmenstreben 1 sind Metall-Hohlprofile mit einem Rechteckquerschnitt, wobei jeweils benachbarte Rahmenstreben 1 durch eines der vier Steckverbindungselemente 2 miteinander verbunden sind. Die Steckverbindungselemente 2 bilden zugleich die Rahmenecken. Wie aus Fig. 3 hervorgeht, weist jedes Steckverbindungselement 2 um 90° zueinander gerichtete Anlageschultern 20 auf, an welche Steckfortsätze 21 anschließen. Auf die Steckfortsätze 21, deren Rechteckquerschnitt weitgehend an den inneren Rechteckquerschnitt der Rahmenstrebe 1 angepaßt ist, können die zwei miteinander durch das Steckverbindungselement 2 verbundenen Rahmenstreben 1, vorzugsweise mit strenger Passung, bis zum Anschlag an der Schulter 20 aufgesteckt oder aufgeschoben werden.

Von jedem der Steckverbindungselemente 2 aus erstreckt sich zu einer Halterung 3, die in dem von dem Rahmen umschlossenen Bereich und in dessen Ebene liegt, ein spannbares Verbindungsglied 4. Die Halterung 3 ist durch ein geschlossenes Drahtseil 30 gebildet (Fig. 4), das über Umlenkelemente 31 am inneren Ende jedes der Verbindungsglieder 4 geführt ist und infolgedessen eine Rechteckfläche umgrenzt. Die Enden des Seils 30 sind in einer Spannvorrichtung 32 festgelegt, durch die die Länge und Spannung in dem Seil 30 veränderbar ist. Die Spannvorrichtung 32 ist in dem gezeigten Ausführungsbeispiel eine Art Wantenspanner, in den mit Gewinden versehene, nicht gezeigte Endabschnitte des Seils 30 eingeschraubt sind. Die Gewinde der beiden Enden sind gegenläufig, so daß eine Drehung der Spannvorrichtung 32 in der einen bzw. anderen Richtung eine gleichförmige Spannung bzw. Entspannung ergibt.

Jedes der Verbindungsglieder 4 umfaßt ein Seil 40, an dessen äußerem Ende eine Gewindebuchse 41 aufgepreßt ist, während an dem inneren Ende davon, ebenfalls durch Aufpressen, eine Halteklaue 42 befestigt ist. Die Halteklaue 42 weist an ihren zueinander parallel verlaufenden Zinken miteinander fluchtende Bohrungen 43 auf, durch die hindurch sich ein Tragstift 33 erstreckt. Die Halteklaue 42 ist so ausgerichtet, daß der Tragstift 33 quer zur Ebene des Rahmens gerichtet ist. Die Halteklaue 42 bildet in Verbindung mit dem Tragstift 33 das Umlenkglied 31, über welches das Seil 30 verläuft.

An jedem Ende des Tragstifts 33 ist ein Halteelement 34 befestigt (in Fig. 4 ist aus Gründen der Übersichtlichkeit nur ein Halteelement 34 dargestellt). Jedes Halteelement 34 hat die Form einer Kreisscheibe, aus der ein Sektor 35 von 90° herausgeschnitten ist. Mit dem Sektor 35 übergreift jedes der Halteelemente 34 die zugeordnete Kante eines in dem Rahmen zu haltenden quaderförmigen Körpers 5, der in Fig. 1 nur strichpunktiert angedeutet ist.

Jedes Steckverbindungselement 2 weist eine angenähert diagonal zu dem durch die Rahmenstreben 1 gebildeten Rahmen verlaufende Bohrung 22 auf, die etwa in ihrer Längsmitte zu einer Schulter 23 abgesetzt ist. Auf der Schulter 23 stützt sich eine Stellschraube 24 mit einem hülsenförmigen Fortsatz ab, in dem ein Innengewinde 25 ausgebildet ist. Die Stellschraube 24 weist an ihrem Kopf eine nicht gezeigte Werkzeugfläche, z. B. einen Innensechskant, auf und dient zur Aufnahme des entsprechenden Gewindes der Gewindebuchse 41 an dem Verbindungsglied 4.

Die Aufnahme des quaderförmigen Körpers in dem durch die Rahmenstreben 1 gebildeten Rahmen geschieht folgendermaßen:

Die durch das geschlossene Seil 30 gebildete Halterung 3 wird zunächst durch Drehen an der Spannvorrichtung 32 auf eine Größe eingestellt, die dem äußeren Umriß des Körpers 5 entspricht. Hierbei werden die Halteelemente 34 an die Kanten des Körpers 5 angelegt und daraufhin durch erneutes Drehen an der Spannvorrichtung 32 daran angepreßt. Da der Tragstift 33 in der Halteklaue 42 drehbar gehalten ist, können die Halteelemente 34 sich entsprechend zu den Kanten des Körpers 5 ausrichten. Zuvor sind bereits die Gewindebuchsen 41 in die Stellschrauben 24 an den Steckverbindungselementen 2 eingeschraubt worden, so daß nunmehr durch Drehen an den Stellschrauben 24 verhältnismäßig große Zugkräfte in den Verbindungsgliedern 4 erzeugt werden können. Diese Zugkräfte bewirken einerseits ein sehr straffes Spannen und eine entsprechend hohe Zugkraft in dem Seil 30 der Halterung 3, so daß diese straff den Körper 5 umschließt. Weiterhin pressen die Zugkräfte jedes der Steckverbindungselemente 2 mit den Schultern 20 gegen die Rahmenstreben 1, so daß hierdurch der Rahmen eine Stabilität und Festigkeit ähnlich denjenigen eines geschweißten Rahmens erhält. Sollte sich durch die in dem Seil 30 der Halterung 3 herrschende Zugkraft eine Dehnung eingestellt haben, die zu einer Lockerung des Umgriffes der Halteelemente 34 um die Kanten des Körpers 5 geführt hat, so kann diese durch Nachstellen der Spannvorrichtung 32 korrigiert werden.

An der unteren horizontalen Rahmenstrebe 1 sind breitflächig auf dem Boden abgestützte Füße 10 befestigt, die den Rahmen in dessen aufrechter Stellung halten.

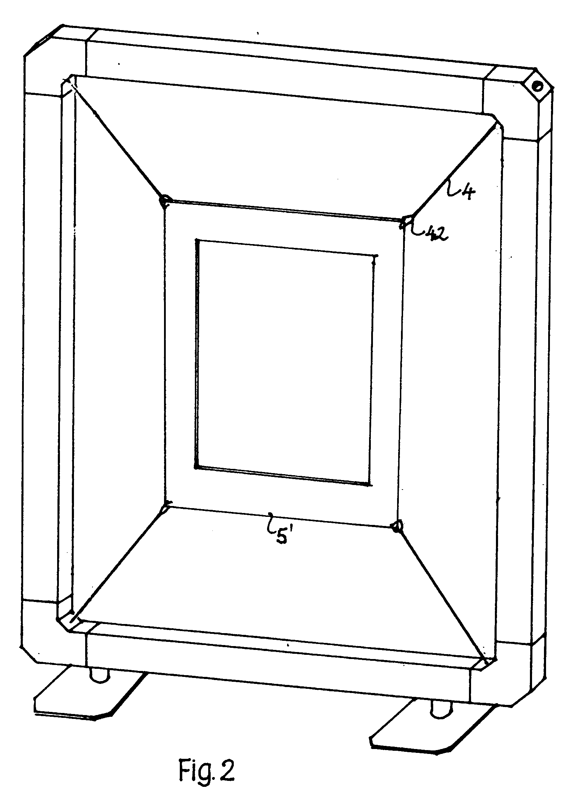

Die Ausführungsform gemäß Fig. 2 unterscheidet sich von derjenigen gemäß Fig. 1 nur dadurch, daß in dem im übrigen identisch ausgebildeten Rahmen anstelle des betont räumlichen Körpers 5 ein gestaltfester, das heißt zur Übertragung von darin herrschenden Zugkräften fähiger Halterungsrahmen 5' aufgenommen ist, der nicht über die Ebene des Rahmens hinaus vorspringt. Dem entsprechend greifen die an den Verbindungsgliedern 4 vorgesehenen Halteklauen 42 unmittelbar an den Ecken des Halterungsrahmens 5' an, indem zu den Halteklauen 42 gehörende, den Tragstiften 33 entsprechende Bolzen Bohrungen in den Ecken des Halterungsrahmens 5' durchsetzen. In dem Halterungsrahmen 5' kann beispielsweise ein Bild oder ein als Schmuckgegenstand gedachter Textildruck aufgenommen sein.

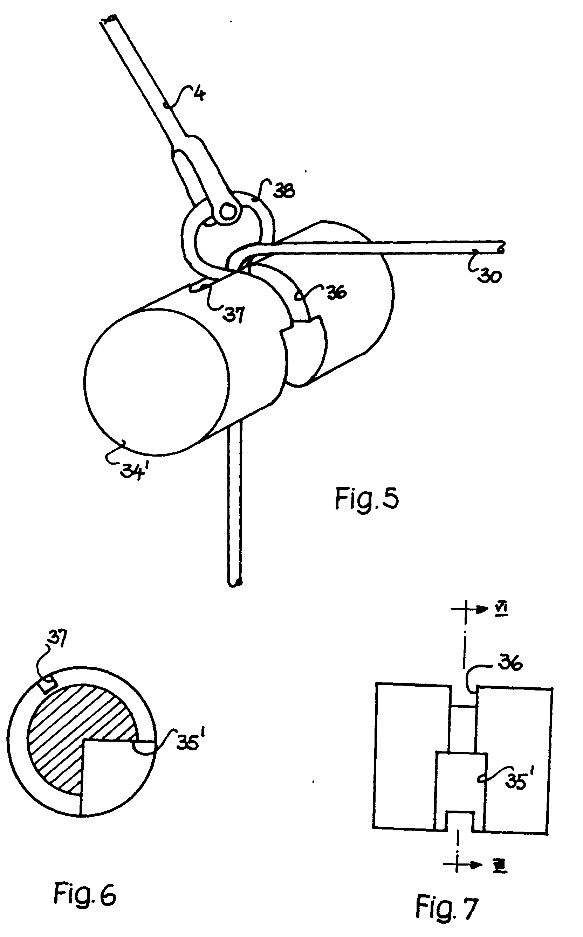

Das in den Fig. 5 bis 7 dargestellte Halteelement 34' kann an die Stelle eines Paares von Halteelementen 34 gemäß Fig. 4 treten. Das Halteelement 34' besteht aus einem weitgehend zylindrischen Körper und weist etwa in seiner Längsmitte eine umlaufende Ringnut 36 auf, in welche auf einem Umfangsbereich von 90° eine sektorförmige Vertiefung 35' eingearbeitet ist. Diese sektorförmige Vertiefung 35' entspricht dem Sektor 35 bei den Halteelementen 34 gemäß Fig. 4 und dient in entsprechender Weise der Aufnahme eines zu haltenden plattenförmigen Gegenstands. Infolge der axialen Begrenzung der sektorförmigen Ausnehmung 35' verhindert diese ein Herausrutschen eines gehaltenen Gegenstands senkrecht zur Rahmenebene.

Wie aus Fig. 5 hervorgeht, weist das Halteelement 34' diametral gegenüber der sektorförmigen Ausnehmung 35' eine sich axial erstreckende nutförmige Vertiefung 37 auf, in welche ein an dem inneren Ende des Verbindungsglieds 4 angebrachter Ring 38 einrasten kann und auf diese Weise gegen eine Verschiebung in Umfangs- und Achsrichtung des Halteelements 34' fixiert ist. Das den Innenrahmen bzw. die davon gebildete Halterung bildende geschlossene Seil 30 verläuft in diesem Fall durch den Ring 38 hindurch und ansonsten in der umlaufenden Ringnut 36. Das Halteelement 34' und der Ring 38 bilden in ihrer Kombination ein Umlenkelement für das geschlossene Seil 30.

In den dargestellten Ausführungsbeispielen ist der in dem Rahmen aufzunehmende Gegenstand weitgehend symmetrisch zum Rahmen angeordnet. Es ist jedoch möglich, durch Einstellung unterschiedlicher Länge der Verbindungsglieder 4 auf einer Seite des Rahmens auch eine unsymmetrische Anordnung des Gegenstands zu bewirken, was z. B. aus geschmacklichen Gründen wünschenswert sein kann. Weiterhin kann anstelle des an seinen Ecken starr verbundenen Halterungsrahmens 5' (Fig. 2) ein solcher Halterungsrahmen eingesetzt werden, dessen an den Ecken aneinander anstoßende Teile gelenkig miteinander verbunden sind. Auf diese Weise ist das Seil 30 bei der Ausführungsform gemäß Fig. 1 durch ein geschlossenes Stab-Viereck als Halterung 3 ersetzt. Auch an einer solchermaßen gestalteten Halterung können Halteelemente 34 auf die in Fig. 1 gezeigte Art befestigt sein.

Auch die in den beiden vorstehenden Ausführungsbeispielen gezeigten Verbindungsglieder 4 können anstelle von Seilen durch gelenkig sowohl mit der zugeordneten Halteklaue als auch mit dem entsprechenden Steckverbindungselement verbundene Zugstäbe gebildet sein. Die Gelenkverbindung kann jeweils durch ineinandergreifende Ringe hergestellt sein, die an den Enden der Zugstäbe und an der Halteklaue bzw. der dem Steckverbindungselement zugeordneten Spannvorrichtung sitzen. Sie dienen dazu, die Ausrichtung der Verbindungsglieder, die abhängig von der Größe des in den Rahmen aufzunehmenden Gegenstands ist, beliebig ändern zu können.

## Patentansprüche

1. Aus mehreren Rahmenstreben (1) zusammengesetzter, geschlossener Trag- und Halterahmen, bei dem jede der weitgehend in einer gemeinsamen Ebene angeordneten Rahmenstreben (1) mit der benachbarten Rahmenstrebe über ein Steckverbindungselement (2) derart verbunden ist, daß benachbarte Rahmenstreben (1) relativ zueinander unter einem sich zur Innenseite des Rahmens öffnenden Winkel angeordnet sind, und bei dem jedes Steckverbindungselement (2) über ein spannbares Verbindungsglied (4) mit einem im Abstand von allen Rahmenstreben angeordneten Innenrahmen (3,5') oder mit einem in dem Trag- und Halterahmen im Abstand von allen Rahmenstreben gehaltenen Gegenstand (5), z. B. einer Platte, verbunden ist, wobei der Innenrahmen bzw. der Gegenstand hinreichend gestaltfest ist, um den von den Verbindungsgliedern (4) übertragenen Zugkräften standzuhalten.

2. Rahmen nach Anspruch 1,
**dadurch gekennzeichnet**,
daß der gestaltfeste Innenrahmen (3,5') als Halterung für einen darin aufzunehmenden Gegenstand ausgebildet ist.

3. Rahmen nach Anspruch 1 oder 2,
**dadurch gekennzeichnet**,
daß der gestaltfeste Innenrahmen (3) ein geschlossenes, über Umlenkglieder (31) an den inneren Enden der Verbindungsglieder (4) geführtes Seil (30) ist.

4. Rahmen nach Anspruch 1 oder 2,
**dadurch gekennzeichnet**,
daß der gestaltfeste Innenrahmen ein geschlossener, an den inneren Enden der Verbindungsglieder angelenkter Stabrahmen ist.

5. Rahmen nach Anspruch 3 oder 4,
**dadurch gekennzeichnet**,
daß an den inneren Enden der Verbindungsglieder (4) die Ecken oder Kanten des im Rahmen aufzunehmenden Gegenstands (5) formschlüssig umgreifende Halteelemente (34) angebracht sind.

6. Rahmen nach Anspruch 5,
**dadurch gekennzeichnet**,
daß ein Paar von Halteelementen (34) in gegenseitigem Abstand an den Enden eines Tragstifts (33) befestigt sind, der senkrecht zur Rahmenebene gerichtet an dem jeweils zugeordneten Verbindungsglied (4) angeordnet ist.

7. Rahmen nach Anspruch 6,
**dadurch gekennzeichnet**,
daß die Halteelemente (34) an dem Tragstift (33) und/oder der Tragstift an dem spannbaren Verbindungsglied um die Tragstiftachse schwenkbar befestigt sind bzw. ist.

8. Rahmen nach Anspruch 5,
**dadurch gekennzeichnet**,
daß jedes Halteelement (34') eine umlaufende Ringnut (36) und im Bereich der Ringnut eine sektorförmige Ausnehmung (35') aufweist und daß das den Innenrahmen bildende geschlossene Seil (30) durch einen an dem zugeordneten Verbindungsglied (4) angebrachten Ring (38) hindurch und längs der Ringnut (36) verläuft.

9. Rahmen nach Anspruch 3 und einem der Ansprüche 5 bis 8,
**dadurch gekennzeichnet**,
daß die Verbindungsglieder und/oder das den gestaltfesten Innenrahmen (3) bildende geschlossene Seil (30) spannbar sind bzw. ist.

10. Rahmen nach Anspruch 9,
**dadurch gekennzeichnet**,
daß das geschlossene Seil (30) durch ein Stellelement (32) längenverstellbar und spannbar ist.

11. Rahmen nach einem der Ansprüche 1 bis 10,
**dadurch gekennzeichnet**,
daß die spannbaren Verbindungsglieder (4) Zugseile oder Zugstäbe sind, die an mindestens einem ihrer Enden ein Schraub-Spannelement (24,41) tragen.

12. Rahmen nach Anspruch 11,
**dadurch gekennzeichnet**,
daß das Schraub-Spannelement eine in dem zugeordneten Steckverbindungselement (2) axial abgestützte Spannschraube (24) oder Spannmutter aufweist, die mit einem an dem Ende des spannbaren Verbindungsglieds (4) befestigten Gewindeteil (41) zusammenwirkt.

13. Rahmen nach Anspruch 12,
**dadurch gekennzeichnet**,
daß das Schraub-Spannelement (24,41) eine durchgehende Bohrung (22) des Steckverbindungselements (2) durchsetzt.

14. Rahmen nach einem der Ansprüche 1 bis 13,
**dadurch gekennzeichnet**,
daß er Füße (10) zum Aufstellen oder Hängeösen zum Aufhängen aufweist.

15. Rahmen nach einem der Ansprüche 1 bis 14,
**dadurch gekennzeichnet**,
daß die Rahmenstreben (1) durch Hohlprofilstäbe gebildet sind.

16. Rahmen nach Anspruch 15,
**dadurch gekennzeichnet**,
daß die Hohlprofilstäbe ein Rechteckprofil haben.

17. Rahmen nach einem der Ansprüche 1 bis 16,
**dadurch gekennzeichnet**,
daß die Rahmenstreben (1) gerade sind.

18. Rahmen nach einem der Ansprüche 1 bis 16,
**dadurch gekennzeichnet**,
daß die Rahmenstreben gekrümmt sind.

19. Rahmen nach Anspruch 17,
**dadurch gekennzeichnet**,
daß die Rahmenstreben (1) zu einer polygonalen Form, insbesondere zu einer Rechteckform, des Rahmens angeordnet sind.

20. Rahmen nach Anspruch 18,
**dadurch gekennzeichnet**,
daß die gekrümmten Rahmenstreben zu einer runden Form, insbesondere Kreisform, des Rahmens angeordnet sind.
